# EUROPEAN PATENT SPECIFICATION

(11) **EP 3 173 781 B1**
(45) Date of publication and mention of the grant of the patent: **24.04.2024**
(21) Application number: 15196393.1
(22) Date of filing: 25.11.2015
(51) Int. Cl.: G01N 29/22, G01N 29/24, G01N 29/26, G01N 29/32

(54) **AIRBORNE ULTRASOUND TESTING SYSTEM FOR A TEST OBJECT**
LUFTGESTÜTZTES ULTRASCHALLPRÜFSYSTEM FÜR EIN PRÜFOBJEKT
SYSTÈME D'ESSAI PAR ULTRASONS EN SUSPENSION DANS L'AIR POUR UN OBJET DE TEST

(43) Date of publication of application: 31.05.2017
(73) Proprietor: Xarion Laser Acoustics GmbH, 1040 Wien (AT)
(72) Inventor: FISCHER, Balthasar, 1040 Wien (AT)
(74) Representative: Vossius & Partner Patentanwälte Rechtsanwälte mbB

(56) References cited:
- DE-A1-102004 030 154
- US-A1- 2011 048 135
- US-A1- 2015 233 870
- MAXIM DASCHEWSKI ET AL: "Resonanzfreie Messung und Anregung von Ultraschall", TECHNISCHES MESSEN TM, R.OLDENBOURG VERLAG. MUNCHEN, DE, vol. 82, 1 March 2015 (2015-03-01), pages 156-166, XP009189978, ISSN: 0171-8096
- M. DASCHEWSKI ET AL: "Influence of thermodynamic properties of a thermo-acoustic emitter on the efficiency of thermal airborne ultrasound generation", ULTRASONICS., vol. 63, 14 June 2015 (2015-06-14), pages 16-22, XP055272451, GB ISSN: 0041-624X, DOI: 10.1016/j.ultras.2015.06.008
- CHANG HONG PUA ET AL: "Non-membrane optical microphone based on longitudinal modes competition", SENSORS AND ACTUATORS A, ELSEVIER SEQUOIA S.A., LAUSANNE, CH, vol. 168, no. 2, 13 April 2011 (2011-04-13), pages 281-285, XP028386473, ISSN: 0924-4247, DOI: 10.1016/J.SNA.2011.04.034 [retrieved on 2011-04-22]

## Description

### 2. State of the Art

In this part, numbers within [ ] refer to prior Art citations which are noted at the end of part 2.

Non-destructive testing (NDT) methods to ascertain the mechanical integrity of components without inducing damage have been crucial in various industries for many years. For a variety of purposes, such as comprehensive quality control during manufacture, in-service inspection or in-service defect assessment and monitoring, it is not expedient to sacrifice test objects in the process [1]. Such inspections are particularly critical for naval, aerospace, automotive industry or construction, where material failures can compromise human safety.

In these areas of industry, the need for robust, durable, lightweight construction has increasingly promoted the use of fiber-reinforced composite (FRC) materials, especially carbon fiber composites (CFC), during recent years. Compared to metals, they usually feature a complex, layered structure and therefore anisotropic material properties [2] leading to a variety of different possible defect types that need to be reliably identified [2, 3]. Consequently, the development of NDT techniques suitable for these materials, preferably allowing a high degree of automation to save costs and increase reliability as well as testing speed, is of great importance.

A number of NDT methods have been developed so far, an overview of which can be found in ref. [4]. Based on the underlying physical detection mechanism, they mostly fall into a few broad categories: Magnetic Particle Inspection, Inductive or Eddy Current Inspection, Visual and Optical Inspection, Radiography and Thermography, Ultrasonic and Sonic Inspection, and Shearography [15]. The first category is limited to ferromagnetic materials and therefore unsuitable for the inspection of FRC, while Eddy Current Inspection is applicable specifically to CFC since carbon fibers are conductive even though the surrounding matrix is usually not. Testing procedures belonging to all other categories have been assessed and implemented for FRC. Comparative reviews of NDT techniques for composite materials [3, 5] show that none of these technologies are equally applicable to the detection of each of the different defect types common in FRC at this point. While all methods have their advantages and drawbacks, some methods are inherently limited to certain test object geometries. Visual and Optical Inspection methods, for instance (with or without colored or fluorescent liquid penetrant) are limited to the detection of surface defects, with the exception of visible defects in transparent materials. Sonic Inspection methods typically suffer from comparably low sensitivity [3] and spatial resolution. Shearography and Thermography are limited to the detection of near-surface defects.

Ultrasound methods (ultrasonic methods) and Radiography, on the other hand, are in principle capable of detecting and localizing both surface and bulk defects with high spatial resolution and sensitivity. However, for FRC, Radiography-based methods, including high-resolution CT imaging, are not well suited to the detection of delamination defects, which constitute one of the most common defect classes in FRC [2], without use of an X-Beam (or Gamma) absorbing liquid penetrant. This, however, leads to significant complication of the procedures and limits the method to the inspection of surfaces or near-surface layers penetrable by the contrast liquid. Furthermore, in many test environments liquids are not wanted or not accepted.

Due to their versatility and good sensitivity, various ultrasound techniques are routinely applied for the inspection of FRC [6]. Most of them employ piezoelectric transducers for generation of ultrasound pulses, their detection or both [5]. While many specific methods to provide detection, imaging or volumetric localization of defects have been developed, distinguished by the exact configuration and number of transducers, they usually fall into two different operation modes. One approach is through-transmission mode, where the test specimen is placed between two piezoelectric transducers, acting as transmitter and receiver respectively. In this configuration the receiver detects the attenuation of the primary ultrasound pulse due to defects. This configuration places constraints on the specimen shape and also thickness due to the pronounced attenuation of ultrasound in FRC compared to metals [3]. Alternatively, the pulse-echo method can be employed, where reflection or backscattering of the primary pulse due to defects is detected from one side of the sample. This method significantly facilitates applicability to complex-shaped test objects of varying thickness, as access to the test object is sufficient from one side only.

Conventional ultrasound testing systems employ a medium such as water or an emulsion or gel respectively to guarantee good coupling of ultrasound pulses to the test object. Allowing the use of ultrasound frequencies up to ~20 MHz, however, requires immersion into a water basin or water jets between transducers and the specimen. Coupling fluids cannot be used for certain FRC structures [6] or certain test environments, which creates need for non-contact test methods.

One actively developed option for contactless testing is the all-optical laser ultrasound method [7] where an ultrasound pulse is created by absorption of a sufficiently strong laser pulse within the test specimen, and detection is performed interferometrically. A different approach is air-coupled ultrasound [8], similar to the conventional transducer-based method, but foregoing the coupling medium. This approach is enabled by increasingly sensitive, highly resonant, focused ultrasound transducers (e.g. [9]), allowing defect detection in spite of the decreased coupling caused by an air gap. While air-coupled systems using through-transmission mode are available by now, the implementation of an air-coupled pulse-echo configuration allowing one-sided tests of specimens poses significant problems. Highly resonant transducers oscillate for many periods both during pulse generation and detection, leading to a significantly increased "dead zone" [3]. This term denotes the surface-near region of the test object where defect detection is rendered impossible due to overlap between primary pulse, reflections from the sample surface and the actual signal contributed by backscattering from defects. For that reason the skilled persons refrain from using this test method for precise material testing.

[16] discloses a method for testing the quality of a mechanical connection.

[17] discloses a measuring device for non-mechanical-contact measurement of a layer.

[18] discloses a device for generating and introducing ultrasound into a testing material.

In [19], a Doppler vibrometer was used to investigate the thermodynamic properties of a thermo-acoustic emitter. The vibrometer was used to detect the velocity and the displacement of a foil.

In [20] the influence of airborne acoustic on the longitudinal mode of a fiber has been investigated. The mechanical deformation of the fiber was measured.

### Prior Art References

[1] Gardner, W.E. "Improving the effectiveness and reliability of non-destructive testing," Series International series on materials evaluation and non-destructive testing, Pergamon Press (1992).
[2] UnnÞórsson, R. "Ndt Methods For Evaluating Carbon Fiber Composites," In Proceedings of Composites Testing and Model Identification (2004).
[3] Kapadia, A. "Best practice guide: Non-destructive testing of composite materials," (2008)
[4] Wong, S.B. "Non-Destructive Testing - Theory, Practice and Industrial Applications," Lambert Academic Publishing (2014)
[5] Vaara, P. and Leinonen, J. "Technology Survey on NDT of Carbon-fiber Composites," (2012)
[6] Hsu, D.K. "Nondestructive inspection of composite structures: Methods and practice," In Proceedings of the 17th World Conference on Nondestructive Testing, (2008)
[7] Pelianov, I., Buma, T., Xia, J., Wei, C-W. and O'Donnell, M. "NDT of fiber-reinforced composites with a new fiber-optic pump-probe laser-ultrasound system," Photoacoustics 2, 63-74 (2014)
[8] zfP - Wiki, TU München, http://zfp.cbm.bgu.turn.de/mediawiki/index.php/Luftultraschall:_Funktionsw eise_und_Einsatzmbglichkeitenhttp://zfp.cbm.bgu.turn.de/mediawiki/index.p hp/Luftultraschall:_Funktionsweise_und_Einsatzmöglichkeiten, accessed on 28.10.2015
[9] Ingenieurbüro Dr. Hillger, http://www.dr-hillger.de, accessed on 28.10.2015
[10] Daschewski, M. et al "Resonanzfreie Messung und Anregung von Ultraschall," In Technisches Messen, 82(3) (2015)
[11] Patent WO2008000007A1
[12] Patent WO2010029509A1
[13] Patent WO2012163681A1
[14] from "Wikipedia, the free encyclopedia" on Nov. 23rd 2015 https://en.wikipedia.org/wiki/Phased array_ultrasonics [The PA [i.e. Phased Array] probe consists of many small ultrasonic transducers [typically piezo-based elements], each of which can be pulsed independently. By varying the timing, for instance by pulsing the elements one by one in sequence along a row, a pattern of constructive interference is set up that results in a beam at a set angle. In other words, the beam can be steered electronically. The beam is swept like a search-light through the tissue or object being examined, and the data from multiple beams are put together to make a visual image showing a slice through the object.]
[15] from Wikipedia, the free encyclopedia" on Nov. 24th.2015 https://en.wikipedia.org/wiki/Shearography
[16] Patent DE 10 2004 030154 A1
[17] Patent US 2015/233870 A1
[18] Patent US 2011/048135 A1
[19]Daschewski, M. et al "Influence of thermodynamic properties of a thermo-acoustic emitter on the efficiency of thermal airborne ultrasound generation" In ULTRASONICS vol. 63, 14 June 2015
[20]Chang Hong Pua et al « Non-membrane optical microphone based on longitudinal modes competition » Sensors and Actuators A, vol. 168, no. 2

### 3. Problems to be solved

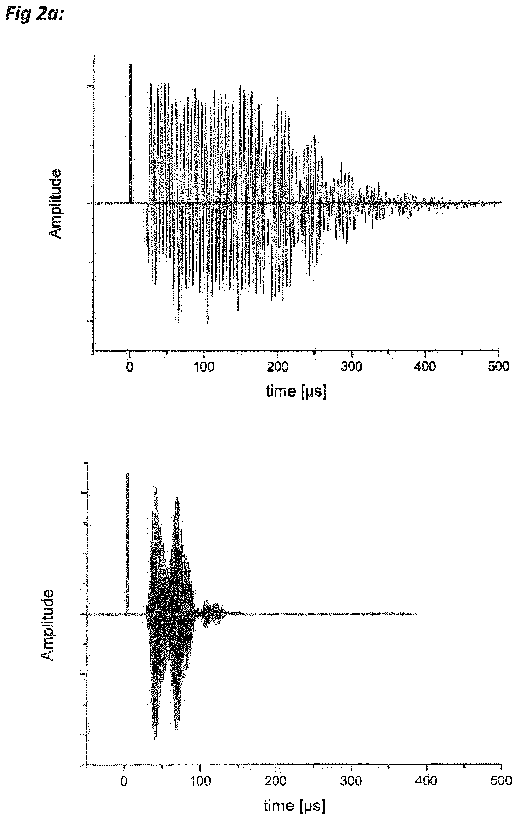

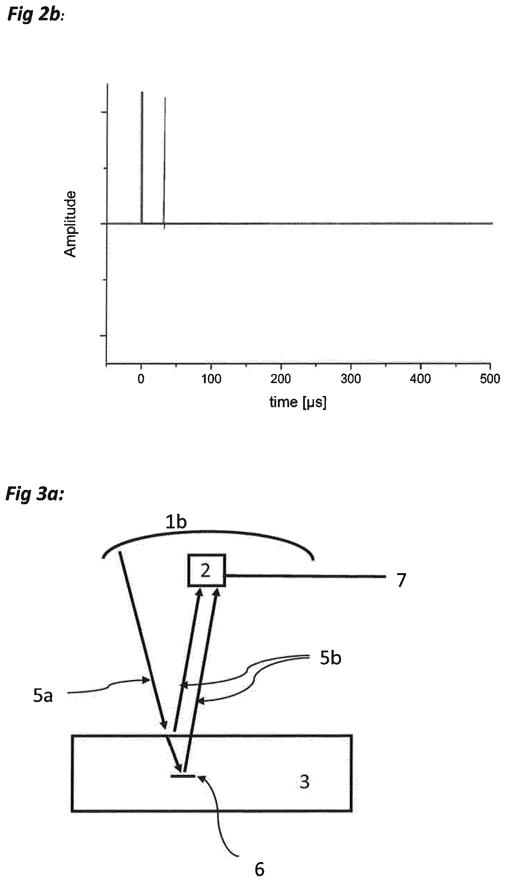

To summarize the problems occurring in the prior Art the following statements can be made:
The NDT testing systems introduced above have the following limitations or disadvantages:
**A)** in a non-airborne system, a **contact medium** other than air is required in principle between the test object and the testing system. However, especially for large-sized test objects, the application of a contact medium onto the test object is time-consuming and the contact medium can contaminate the test object. If water is used e.g. as a contact medium, the test object might rust/oxidize, which is not desirable.
**B)** A conventional airborne ultrasound testing system is typically used in **transmission mode.** This requires physical accessibility from both sides of the test object which cannot be guaranteed in all testing environments. Especially for large-sized test objects or test object's that are installed in narrow compartments or the like, accessibility from two sides can be very challenging or impossible.
**C)** If a conventional system is used in reflection mode (pulse-echo method), the post-pulse oscillations (ringing; see Fig 2) of the piezo, which are typically used as sender and receiver, are **limiting the temporal resolution** of the system and hence the depth-resolution. For instance, for a thin test object, or a thick test object with a defect close to the surface, the temporal sequence of the corresponding reflection signals may superimpose and thereby prevent an unambiguous signal analysis, which would be required for a sharp image of the test object. One also speaks of the so-called "dead time" resulting in a "dead zone".
**D)** Most test objects absorb higher ultrasound frequencies better than lower frequencies. On the other hand, a better resolution would be obtained with a higher frequency, since the corresponding smaller wavelength resolves small-sized internal defects with more accuracy. For this reason, in conventional systems, **several ultrasound detectors** of different quality are needed and used: a **low-frequency receiver** to enable testing of thick test objects; **and a high-frequency receiver** to enable a sharp image with a high spatial resolution. Conventional airborne ultrasound detectors have a very limited frequency bandwidth due to the highly-resonant design (required due to the fact that the receiver's sensitivity would be too poor for a non-resonant design). However, the use of several receivers at the same time might lead to mutual interference and a complex mechanical setup, and the sequential use of different configurations may lead to an increase in testing time, which in most cases is undesirable.
**E)** In a conventional airborne testing system, the sensitivity of the detector typically scales with its size. This is, for example, true for a piezo receiver. Therefore, one needs a **large-sized receiver** in order to detect the potentially weak signal as the emitted ultrasound can be attenuated by scattering and absorption of the test object. However, the resolution of the image obtained by the ultrasound testing system is not only a function of the acoustic frequency, it can also be severely limited by the size of the receiver.

It is therefore a task of this invention to find a way of avoiding the use of contact media (liquid coupling-fluids) in ultrasonic test environments while at the same time avoiding the drawbacks of the well-known, air-coupled (especially contacting media-free) ultrasound material testing systems so that an airborne ultrasound testing system for a test object is created and can be used in a wide variety of test objectives.

### 4. Proposed solution

In this part numbers within [ ] refer to prior Art citations which are noted at the end of part 2.

The technology described in the claims and in the following allows us to circumvent these problems, and therefore to efficiently implement a single-sided pulse-echo ultrasound NDT method for FRC and similar materials. Similar materials in the sense of the invention cover all materials that can be tested with ultrasound. That includes parts made from one or more of the following elements: Wood, plastic, rubber, glass, ceramics, metal, carbon fiber, compound materials, and others. Such parts may include tires with embedded metal wires, IC-Boards, airplane wings, door panels, coaxial cables, construction elements etc.

The invention solves all problems discussed in part 3. The proposed ultrasound testing system contains a resonance-free thermo-acoustic ultrasound generator (emitter). Examples and explanations can be found at [10]. It further contains a membrane-free optical microphone. Examples and explanations can be found at [11-13]. Further examples can be found at www.xarion.com e.g. the product line Eta. Such optical microphones work in a frequency range from 10 Hz up to 1 or 2 MHz in air, and up to 25 or 50 MHz in liquids, which make them very suitable for ultrasound detection. Generator and microphone are - according to the invention - in an air-coupled pulse-echo arrangement or in an air-coupled transmission mode arrangement. A thermo-acoustic generator, also called an electro-thermo-acoustic emitter, is an ultrasound generating device based on the thermo-acoustic effect, which does not rely on mechanically deformable or physically oscillating parts but generates ultrasound by quickly and sequentially heating and cooling its surface. Typically, a thin polyethylene foil with evaporated layers is employed. Said generated ultrasound then emits onto or through the test object. A transducer involving oscillating mechanically deformable elements would be a transducer based on a piezo crystal or a loudspeaker membrane, for example. However, such transducers with mechanically deformable elements are subject to the problems mentioned above and are not favorable for that reason.

Seen from a broader perspective, the combination of a laser beam and a material sample, or the combination of a laser beam and the test object itself, can be regarded as a resonance-free thermo-acoustic ultrasound generator. Hereby, the laser beam of preferably high-intensity is operated in pulsed mode, so that the laser-radiation of the short pulse or the sequence of several short pulses generates a thermo-acoustic shock wave due to interaction with the target material. This is due to the so-called optoacoustic or photoacoustic effect. The target material sample can be, for instance, any plate introduced between said surface of the test object and the laser pulse source, or it can be the surface of the sample itself. Furthermore, said target material can also be a material layer buried inside the test object, for instance a specific light-absorbing matter inside the test object. It can also be the medium (e.g. air or liquid) between the laser and the test object. Furthermore, it can also be a layer of paint or color or marking applied onto the surface of the test object.

A sound pressure wave emitted from one of the two emitter possibilities as described above (foil-based electro-thermo-acoustic emitter or pulsed laser-induced ultrasound generator) will be called a resonance-free thermo-acoustic ultrasound pressure wave.

A membrane-free optical microphone is an all-optical sound pressure detector. It does not rely on mechanically deformable parts (such as a piezo crystal or a microphone membrane) since it detects pressure variations by optical means based on an interferometric read-out of the optical wavelength alteration caused by the sound-pressure induced alteration of the refractive index of the medium. It does not contain any mechanically movable or deformable elements, which are typically comprised in other optical microphones, but detects sound pressure by detecting the change of the refractive index of the sound-propagating medium. By contrast, conventional optical microphones typically comprise movable or deformable surfaces or mirrors. These conventional optical microphones cannot be called membrane-free optical microphones, and they are not meant in the context of this invention.

Due to the use of airborne ultrasound waves, for the proposed apparatus, a contact-free examination of the test object is possible. No contact medium such as water or gel is required. Furthermore, the proposed apparatus allows a one-sided testing of the test object. The accessibility from two sides is therefore not required but still possible. Also, the thermo-acoustic generator used in combination with the membrane free optical microphone in the proposed apparatus does not show ringing effects as the prior art testing equipment typically exhibits (see Fig 2), but is able to emit a very short Dirac-like excitation signal on the order of a few µs or even below 1µs. By Dirac-like excitation pulse, a signal similar to the mathematical Dirac function is meant, in other words, an infinitely thin excitation spike. This behavior also applies to the thermo-acoustic wave induced by laser excitation, since the photoacoustic (also called optoacoustic) pulse is very short. The same holds true for the optical microphone used as a signal detector: it does not show ringing effects either and therefore can detect very short Dirac-like ultrasound signals without adding artificial temporal signal broadening. Due to this true temporal impulse response of the proposed testing apparatus, thin materials can be examined as well as defects of thick test objects even if they are located close to the surface. No dead time and no temporal signal-shading effects occur.

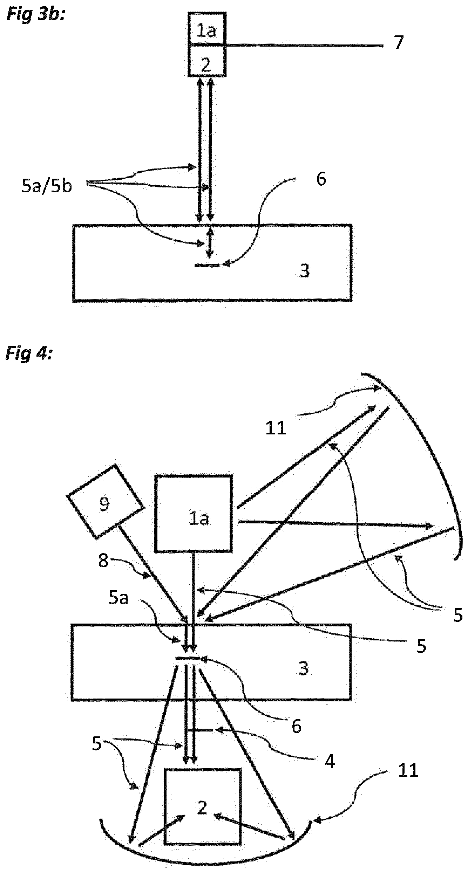

According to the Fourier theorem, the short impulse emitted by the thermo-acoustic generator contains a large frequency bandwidth. On the other hand, the optical detection system (i.e. the optical microphone) is also characterized by its very large detection bandwidth of several MHz. Therefore, the device according to the invention is capable of processing low and high frequencies at the same time. This enables the examination of thick-sized test objects while at the same time enabling high spatial resolution. Furthermore, the apparatus can be very small-sized (see Fig 3), therefore not disabling the very high spatial resolution of the image.

Optical microphones can be found in the citations [11-13].

A practical example of such a useful optical microphone can be found on the website (www.xarion.com) of the Company XARION Laser Acoustics GmbH. However, the invention is not restricted to any special type of optical microphone. Preferably, the fiber-coupled embodiment of the optical microphone, the Eta product series-type of XARION Laser Acoustics GmbH www.xarion.at, is used best for the objective aim.

### 5. Description of the Drawings (possible further detailed examples of realization of the invention)

The drawings are described in an overlapping method. Same reference numerals refer to same elements.
- Fig 1: shows a typical inventive apparatus.
- Fig 2a: shows the signals including ringing of known testing devices
- Fig 2b: shows the ringing free signals from a thermo-acoustic transducer, employed by the invention in combination with a membrane-free laser optical microphone.
- Fig 3a: shows a focusing embodiment.
- Fig 3b: shows a compact pulse-echo system
- Fig 4: shows a different apparatus.
- Fig 5: shows another different apparatus.
- Fig 6: shows the configuration of a membrane-free optical microphone.
- Fig 7: shows a scanning system.
- Fig 8: shows an array system employing arrays of thermo-acoustic transducers and arrays of membrane-free optical microphones.

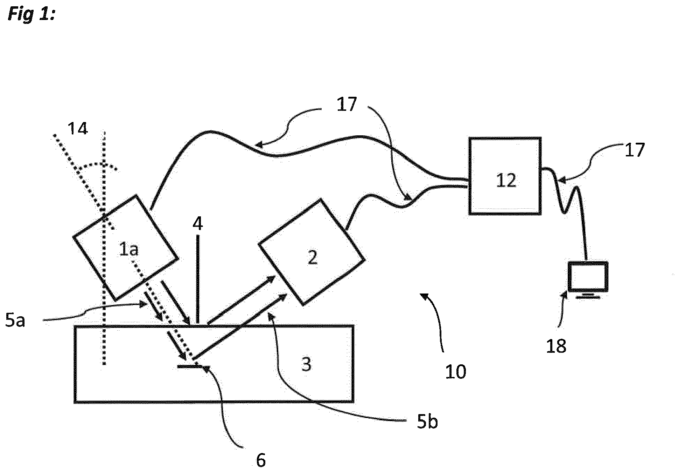

A typical inventive apparatus is shown in Fig 1. Airborne ultrasound waves 5 are emitted from a thermo-acoustic generator 1a into air or into another sound-propagating medium such as a specific gas 10 which might be in the test environment. Such specific gas may, for example, include nitrogen or carbon dioxide or 1,1,1,2-Tetrafluoroethane or a gas mixture which may be favorable due to the fact that the test object 3 will not be exposed to oxygen; it can also be favorable since it augments the sensitivity of the membrane-free optical microphone due to the fact that the pressure-dependent change of refractive index is dependent on the medium. The sound-propagating medium may also be any liquid (such as oil, water or blood or other); however, the efficiency of the thermo-acoustic generator is favorable if used in gas. By consequence, the sound propagating medium will typically be regular, environmental air. The sound waves are incident on the test object 3. Due to reflection from the front or rear surface of the test object, or from internal defects 6 or from any particularly ultrasound reflecting parts, the sound waves are detected by the receiver 2. Such parts could be e.g. loose filaments of a fabric, cracks in a compound material as well as elements in an smd integrated circuit or discrete parts on a mother board of a computer or the like. Furthermore, delamination inside a layer-compound can be detected, even if, from the exterior, no damage is visible. With the invention, one could on the other hand also inspect, for example, cracks in carbon rods or uranium rods submersed in heavy water or the like. There, the airborne device might be submerged into the reactor vessel. Hence, the invention can be used in a wide variety of test objectives within gases or within liquids.

A shielding wall 4 can be used to isolate the unwanted direct sound, for instance the sound reflected from the surface of the test object or the sound from the sound source (generator/emitter). Typically, a control unit 12 consisting of hardware and software is used for the generation of the electric pulse signal, the analysis of the electric signal as obtained by the receiver 2 and for the generation of an image of the test object.

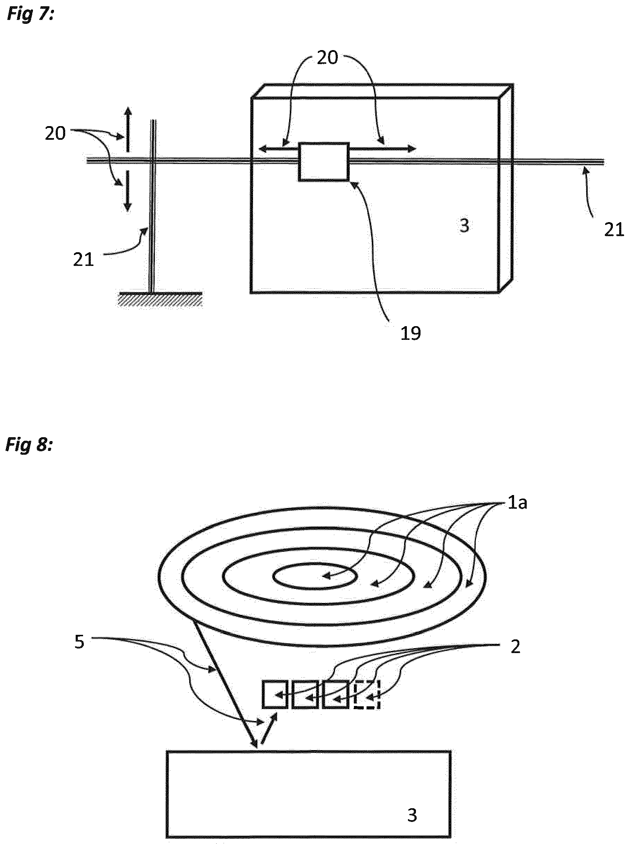

More specifically, the hardware consists of (i) an arbitrary signal generator that is able to generate the electric excitation pulses sent to the generator 1a and (ii) a signal-analysis hardware (typically an analog-to-digital converter and optionally a digital signal processing unit such as a DSP chip) receiving its input from the detector 2, and (iii) a mechanical scanner (refer to Fig 7) to physically move the generator 1a and the detector 2 over the surface of the test object, and, furthermore, (iv) a software routine capable of controlling at the same time the signal generator, the signal analysis hardware, the scanner, while processing and combining the amplitude, temporal and spectral data stream. More specifically, it can be of interest to analyze the spectral information of the received signal using a Fourier Transform. Due to the broad spectral bandwidth of both the generator and the detector, many frequencies can be emitted and received at the same time. Hence, by using spectral analysis as part of the signal processing, many frequency bands can be investigated at the same time. Hereby, multiple, sequential scanning procedures (each using different distinct frequencies, as is common in state-of-the-art devices) can be avoided. Such a control unit 12 can either be a commercially available device (such as a Dr. Hillger USPC 4000 AirTech (scanner), Hill-Scan 3010 (converter) and Hilgus (software)) available at Ingenieurbuero Dr. Hillger http://www.dr-hillger.de, or it can be a specifically built system. The control unit 12 is connected with an electrical connection 17 to a computer system 18 for data logging/recording, signal analysis, further processing and display via monitor.

Further reference numerals used in Fig.1:
- 1a:: Thermo-acoustic ultrasound generator
- 2:: Membrane-free optical microphone (ultrasound receiver)
- 3:: Device under test, test object, material sample
- 4:: Optional shielding wall
- 5:: Ultrasound pressure wave 5a from generator 1a, 5b to receiver 2
- 6:: Material defect
- 10:: Medium in test environment: air or other gases or other fluids
- 12:: Control unit
- 14:: Angle, exemplary for different angles for the different elements of the ultrasound generator and receiver. E.g. receiver 2 is likewise in a particular angle directed to a vertical/normal on the surface of the test object 3. This angle is not shown in the drawing and may vary depending on the shown angle 14 of the ultra sound generator and also on other physical matters such as the material sample. The user will in practice vary the angle 14 and the respective angle of the receiver 2 so that the received signal or signal-component of relevance is a maximum or close to a maximum.
- 17:: electrical wire
- 18:: computer system

Possible variations of the device of Fig 1:
- the angles 14 between generator 1a and test object 3 (more precisely: the angle formed between the axis of the emitted ultrasound and the surface normal of the test object), or the receiver 2 and test object 3 may be varied in order to maximize a certain signal component. Note that the angle 14 as indicated in Fig 1 not only applies to the specific element where it has been indicated but to all angles relevant for the skilled person in the field of ultra sound measurement. That includes the angle between a straight line (direction of emission) from the generator to the surface of a test object and a straight line from the receiver (direction of reception) to the test object. In addition, the angle of any other element used in the apparatus may be varied. The angles of each component may be identical or different from each other, according to the desired effect in terms of performance. In order to vary said angle, the generator 1a is rotated with respect to the test object 3 so that the sound waves are incident onto the test object under a different angle, which could be any angle between 0° (180°) and 90°. The same applies for the angle between the receiver 2 and the test object.

The distance between generator 1a, receiver 2 and test object 3 may be varied in order to maximize a certain signal component. In order to vary said distance, the generator 1a and the receiver 2 are physically placed closer (e.g. a few mm) to each other, or, placed further away (e.g. a few mm, a few cm or even several meters) from each other. The same applies for the distance between the generator and the test object, and/or the receiver and the test object, respectively.

Ultra sound generator 1 and receiver 2 might be mounted on one carrier or on different carriers. Most notably, it is not required that the direct reflection of the sound waves incident on the surface of the test object are reflected into the detector. It can also be desirable to excite so-called surface waves or bulk waves in the test object. These waves then emit sound even further away from the location of incidence of the sound waves emitted from the sender.
- the generator 1a and the receiver 2 may be placed on opposing sides of the test object 3, resulting in a transmission-setup measurement.

Fig 2 (prior art) shows in the upper part signals emitted from a conventional 200 kHz piezo ultrasound generator and below a conventional 500 kHz generator (right). Electric stimulus (thick line) and corresponding emitted ultrasound signals as emitted from the piezo generators are shown. Even though the electric stimulus is very short (in this example it has a length of 2µs), the resulting sound signal can have a length of several 100µs, because a piezo crystal creates a serious ringing effect due to its self-resonance.

Fig 2b illustrates the acoustic signal emitted from a thermo-acoustic generator as measured by a membrane-free optical microphone. Electric stimulus (thick line) and corresponding acoustic signal are shown. Neither the thermo-acoustic generator nor the optical microphone show self-resonance behavior, since both transducers are not based on mechanically moving parts. Therefore the recorded signal is very short and corresponds to a high degree to the electric stimulus. A conventional state of the art piezo receiver could not be used for detection without adding undesired mechanical resonance effects. Furthermore, a conventional capacitive microphone would not have enough frequency bandwidth (typically limited to 140 kHz), to record this short pulse of a length of 2µs which requires at least a bandwidth of 1/2µs=500 kHz.

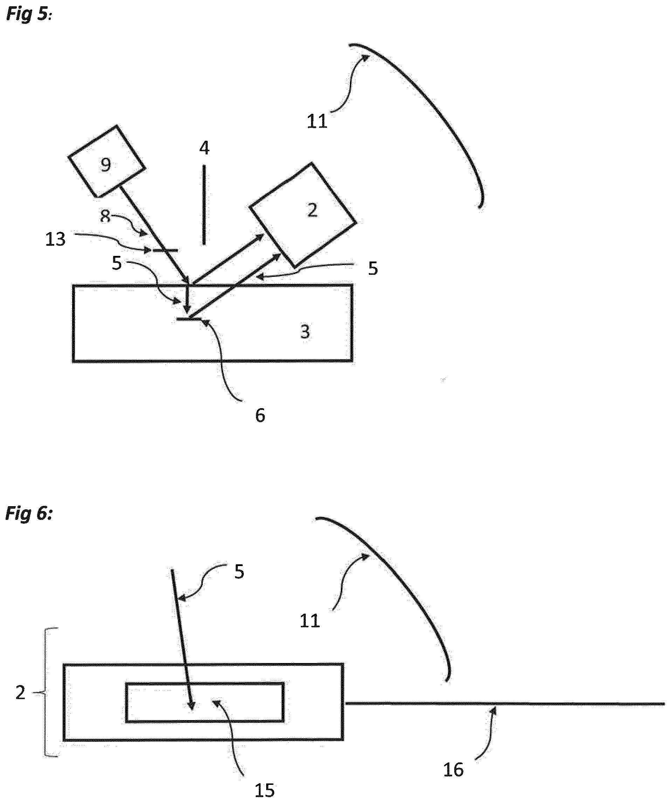

Fig 3a shows a focusing embodiment which might be employed in order to facilitate a well-directed excitation air pressure wave. Due to the fact that the thermo-acoustic generator 1b uses a very thin foil on the order of µm-thickness, it can be formed into the shape of a curved, especially parabolic mirror. Hereby, it is possible to focus the emitted ultrasound signal onto a small-sized spot on the test object 3. This allows a higher spatial resolution. The receiver 2 may be placed in front of the generator 1b via a thin mechanical mount 7, since the receiver is of small size and does not substantially shade the emitted signal from the generator. The receiver typically has a through-hole, through which the emitted sound pressure wave 5 from the generator 1b and the reflected sound pressure waves may also propagate. In Fig 6, this through-hole 15 is shown in detail. Due to this setup, which gets the shape of a handy probe where generator and microphone are integrated, the apparatus may be of very small physical size. The generator 1b could, as an extreme, not be larger than the footprint of the detector 2. The acoustic waves 5 should be - at least partially - radiated through the detector 2 thereby forming an apparatus of minimal lateral dimensions.

Further reference numerals used in Fig.3a
- 1b:: Thermo-acoustic ultrasound emitter/generator
- 2:: Membrane-free optical microphone (ultrasound receiver)
- 3:: test object, material sample
- 5:: Ultrasound pressure wave 5a from generator 1a, 5b to receiver 2
- 6:: Material defect
- 7:: Mechanical mount

Possible variations of the device of Fig 3a:
- the angles 14 (see Fig 1) between generator 1b and test object 3, or receiver 2 and test object 3, or generator and receiver may be varied in order to maximize a certain signal component
- the distance between generator 1b, receiver 2 and test object 3 may be varied in order to maximize a certain signal component
- the surface shape of the generator 1b may be varied. It may be smaller or larger, according to the required sound pressure level, or, it may take the shape of a sphere, of a plane, of a parabolic mirror or other useful shapes for the concentration of creating the ultra sound pressure wave.
- the surface shape of the receiver 2 may be varied as well. It may be smaller or larger, according to the required detector sensitivity, or, it may take the shape of a sphere, of a plane, of a parabolic mirror or other in order to guide or reflect the returning sound wave into the hollow chamber of the optical microphone.
- additional mirror elements may be placed in front of (or: behind of) the receiver 1b or the detector 2; also refer to Fig 4 for a more thorough explanation of the mirror elements. These mirror elements can be planar or have a curved surface (for instance a parabolic shape). The mirrors may contain holes for sound excitation wave transmission, if required.

Fig 3b shows a variation of the setup shown in Fig 3b by minimizing the size of the apparatus. The receiver typically has a through-hole, through which the emitted sound pressure wave 5 from the generator 1b and the reflected sound pressure waves may also propagate. In Fig 6, this through-hole 15 is shown in detail. As mentioned earlier, due to this setup, which gets the shape of a handy probe where generator and microphone are integrated, the apparatus is of very small physical size. The generator 1b has a size which is comparable to the size of the detector 2. The acoustic waves 5 should be radiated through the detector 2 hereby forming an apparatus of minimal lateral dimensions. Since the sound waves are emitted with an angle of approximately 90° towards the surface of the test object 3, the ultrasound waves 5a emitted from the generator and the ultrasound waves 5b incident onto the detector overlap.

Further reference numerals used in Fig.3a
- 1a:: Thermo-acoustic ultrasound emitter/generator
- 2:: Membrane-free optical microphone (ultrasound receiver)
- 3:: test object, material sample
- 5:: Ultrasound pressure wave 5a from generator 1a, 5b to receiver 2
- 6:: Material defect
- 7:: Mechanical mount

Fig 4 shows a different apparatus, where the generator 1 and the receiver 2 may be placed on opposing sides of the test object 3, resulting in a transmission-setup. Instead of the generator 1 also here, an alternative source of ultrasonic wave, a laser 9 can be used. Note that generator 1 and laser 9 are usually not being used at the same time, but they may replace each other, respectively. Also note that the generator 1 can either take the shape of generator 1a or generator 1b, and is hence simply called generator or emitter 1. Also refer to Fig 5 for a more detailed description using the laser beam 8 emitted by a laser 9 as an ultrasonic wave generation.

Reference numerals in Fig.4:
- 1:: Thermo-acoustic ultrasound generator
- 2:: Membrane-free optical microphone (ultrasound receiver)
- 3:: test object, material sample
- 4:: Optional shielding wall
- 5:: Ultrasound pressure wave
- 6:: Material defect
- 8:: Laser beam, generating a thermo-acoustic shock 5 wave at the surface of the test object 3
- 9:: Laser
- 11:: Mirror element

Possible variations of the device of Fig 4:
- the angles 14 (see Fig 1) between generator 1b and test object 3, or receiver 2 and test object 3, or generator and receiver may be varied in order to maximize a certain signal component
- the distance between laser 9, receiver 2 and test object 3 may be varied in order to maximize a certain signal component
- the laser 9 may be operated in different pulse-length modes (fs, ps, ns, and other) and at different optical wavelengths (e.g. at 1064nm, 532nm, the far-infrared, and other).
- the surface shape of the receiver 2 may be varied. It may be smaller or larger, according to the required detector sensitivity, or, it may take the shape of a sphere, of a plane, of a parabolic mirror or other.
- additional mirror elements 11 may be placed in front of (or: behind of) the detector 2. These mirror elements can be planar or have a curved surface (for instance a parabolic shape). The mirrors may contain holes for sound transmission, if required. The mirror elements serve the following purpose: as for the generator 1, sound waves may be radiated in a non-directive manner. This is to say, the sound waves may be radiated not only towards the test object 3, but also in other spatial direction. The mirror collects these sound waves and focusses them onto the surface or inner areas of the test object. Hereby, the intensity of the soundwave incident onto the surface of the test object is maximized, which in many application is desirable. As for the detector 2, the purpose is similar: since the sound waves irradiated from the test object 3 may be directed in several spatial directions and potentially get lost by not being incident onto the detector 2. The mirror element 11 is collecting these sound waves and redirecting them onto the aperture of the detector (hollow chamber 15). Due to the additional path length the reflected wave needs to travel, the reflected signal can be temporally delayed compared to the direct sound which hits the detector 2 without the detour via mirror element 11. This may, due to the short temporal delay for instance, not be of importance; or, the subsequent signals can be isolated using temporal gating methods. Furthermore, the detector 2 can be shielded using am acoustic shield 4, so that no direct signal is incident onto it. Yet another possibility is that the detector is placed away from the location where noticeable direct sound is emitted onto the detector, and that the main portion of the ultrasonic wave can only reach the detector via the mirror element 11.

Fig 5 shows a different variant apparatus, where the generator is not a thermo-acoustic generator but a high-intensity laser, operated in short-pulse mode 9. The emitted laser beam 8 leads to a thermo-acoustic shock wave as soon as it makes contact with the medium of the test object 3. If the laser beam is focused in air or in liquid and has sufficient energy, the beam itself (without additional medium other than air) can generate a plasma spark which leads to a shock wave. This shock wave is an acoustic wave 5 which is then detected by the means as described above. If, for a specific reason, the ultrasonic wave would not be generated by the direct contact of the laser beam 8 with the test object 3 (e.g. when the material of the test object is transparent to the laser beam), an absorption target 13 (which is not transparent) may be introduced into the laser beam 8. This absorption target 13 has the desired degree of absorption (usually a high degree of absorption) and will not be damaged by the laser beam 8. It generates a thermo-acoustic (ultra)sound acoustic wave 5, which has similar properties as an acoustic wave radiated from a generator (5, Fig 4). The apparatus shown in Fig 5 may also be used in water or oil or inside another liquid, so that the space between the emitter 9 and the test object 3 (as well as the space between the object and the detector 2) is filled with this liquid.

Further reference numerals in Fig.5:
- 2:: Membrane-free optical microphone (ultrasound receiver)
- 3:: test object, material sample
- 4:: Optional shielding wall
- 5:: Ultrasound pressure wave
- 6:: Material defect
- 8:: Laser beam, generating a thermo-acoustic shock (5) wave at the surface of the test object (3)
- 9:: Laser
- 11:: Mirror element
- 13:: Absorption target

Possible variations of the device of Fig 5:
- the angles 14 (see Fig 1) between emitter 1b and test object 3, or receiver 2 and test object 3, or emitter and receiver 2 may be varied in order to maximize a certain signal component.
- the distance between laser 9, receiver 2 and test object 3 may be varied in order to maximize a certain signal component.
- the laser 9 may be operated in different pulse-length modes (fs, ps, ns, and other) and at different optical wavelengths (e.g. at 1064nm, 532nm, the far-infrared, and other)
- the laser 9 and the receiver 2 may be placed on opposing sides of the test object 3, resulting in a transmission-setup measurement.
- the laser 9 may be directed through the through-hole of the detector 2. (The term through-hole is further explained in Fig 6.) This setup allows for a testing-apparatus of minimal lateral dimensions. Minimal lateral dimensions may be of interest in confined spaces or, for instance, if additional equipment needs to be placed in the proximity of the apparatus.
- the surface shape of the receiver 2 may be varied. It may be smaller or larger, according to the required detector sensitivity, or, it may take the shape of a sphere, of a plane, of a parabolic mirror or other.
- additional mirror elements 11 may be placed in front of (or: behind of) the detector 2. These mirror elements can be planar or have a curved surface (for instance a parabolic shape). The mirrors may contain holes for excitation sound transmission, if required.

Fig 6 shows a configuration of the membrane-free optical microphone. Sound pressure 5 is influencing the through-hole 15 optical properties, affecting the laser beam 16 of the optical microphone.

For details of the configuration of the membrane-free optical microphone, also refer to published references [11-13].

Numeral 2 indicates a membrane-free optical microphone (ultrasound receiver); 5 indicates ultrasound pressure waves and 11 a mirror element. 15 indicates a through-hole in the microphone, filled with arbitrary medium (air, liquid, or other) and 16 indicates a laser beam for interrogation of membrane-free optical microphone. The laser beam is either created directly by a laser diode at the location of the microphone 2 or might be preferably delivered through an optical fiber.

Fig 7 shows a new scanner system employing the inventive combination of a sound generator made from a resonance-free thermo-acoustic ultrasound generator which does not rely on mechanically deformable or oscillating parts and a the sound receiver made from a membrane-free optical microphone in an air or gas coupled pulse-echo arrangement. By the help of guide rails 21 or similar arrangements, the testing system 19 (refer to any of the devices of fig 1, 2, 3a, 3b and 5) containing generator and receiver is moved over the surface of the test object 3 (material sample) along the directions of movement 20, also called the scan direction or scan movement 20.

Fig 8 illustrates an exemplary array system. In this configuration, the generator consists of two, three or more emitting elements 1a. See also [14]. These emitting elements 1a can be arranged side-by-side, or in a concentric manner as shown in Fig 8. This so-called phased-array configuration allows to direct the emitted beam 5 into a specific desired spatial direction by controlling the phase between the single elements. It also allows to focus the beam 5 of the ultrasound pressure wave onto the surface of the test object 3. The detector 2 also consists of two, three, or more membrane-free optical microphones (ultrasound receivers). This detector configuration allows to analyze the differential signal, or to further improve the signal-to-noise ratio. It may also be used for beam-forming analysis or other techniques commonly used and known to experts in the field.

Further devices/variants and methods are described and covered in the claims.

## Claims

1. Airborne ultrasound testing system for a test object containing a sound generator (1;9) and a sound receiver (2) and a control to control both, the sound generator (1;9) and the sound receiver (2), and a computer assisted test result interface to register or display a test result or an image of a tested test object (3) derived from the signals of the sound receiver (2), **characterized in that** the sound generator (1) is a resonance-free thermo-acoustic ultrasound generator which does not rely on mechanically deformable or oscillating parts, said sound generator (1, 9) is constructed as a pulsed laser which emits a Dirac-like excitation laser pulse having an excitation pulse signal of less than 1 microsecond and that the sound receiver (2) is a membrane-free laser-based optical microphone, said membrane-free laser-based optical microphone detects pressure variations by optical means based on an interferometric read-out of the optical wavelength alteration caused by the sound-pressure induced alteration of the refractive index of the sound propagating medium, in an air or gas coupled pulse-echo arrangement or in an air or gas coupled transmission mode arrangement.

2. Testing system of claim 1, **characterized in that** a sound-shielding wall (4) with or without physical contact to the test object (3) is provided at the testing system (1) to isolate unwanted direct sound waves (Sa) of the generator (1;9) from sound waves (Sb) influenced or reflected by the test object (3) and/or wherein the control (12) contains a subcomponent for spectral signal analysis.

3. Testing system of claim 1 or 2 wherein the generator (1;9) and/or the receiver (2) are, when in use, spatially positioned relative to a vertical plane on the surface of the test object (3) at an angle (14) to face a test object (3), **characterized in that** a mechanical mount (7) is provided in the testing system (1), which is adapted to vary said angle (14) with respect to the relative position of the generator (1,9) and/or the receiver (2) to said vertical plane on the test object (3), wherein preferably the generator (1;9) and the receiver (2) are, when in use, spatially positioned relative to a test object (3) by said mechanical mount (7) which provides means for adjusting the angle (14) and/or the distance between the generator (1;9) and receiver (2) and the test object (3) respectively.

4. Testing system of any of the preceding claims **characterized in that** a specific gas or a liquid (10) are provided for having air or another sound-propagating medium between the test object (3), the generator (1;9) and the receiver (2) to allow propagation of the airborne ultrasound waves (5) which are emitted in a thermo-acoustic way.

5. Testing system of claim 3 **characterized in that** the receiver (2) is mounted in front of the emitter (1b) via the mechanical mount (7), so that emitting direction and receiving direction of the air pressure waves are at least substantially parallel.

6. Method of testing a test object (3) with ultrasound pressure waves in gas or liquid, employing an ultrasound generator (1;9) and an ultrasound receiver (2), **characterized in that** a ultrasound generator (1; 9) is chosen which does create a resonance-free thermo-acoustic ultrasound pressure wave near or on the surface or inside of the test object (3), while said generator (1; 9) is constructed as a pulsed laser and emits a Dirac-like excitation laser pulse having an excitation pulse signal of less than 1 microsecond, and that the reflected ultrasound air pressure waves (5b) from the test object (3) are received and detected by a membrane-free laser-based optical microphone as sound receiver (2), which is constructed to detect pressure variations by optical means based on an interferometric read-out of the optical wavelength alteration caused by the sound-pressure induced alteration of the refractive index of the sound propagating medium caused by the reflecting ultrasound air pressure waves (5b), wherein said detected ultrasound air pressure waves (5b) are analyzed and the results registered or displayed in an conventional manner.

## Patentansprüche

1. Luftgestütztes Ultraschalltestsystem für ein Testobjekt, welches einen Schallgenerator (1; 9) und einen Schallempfänger (2) und eine Steuerung, um beide, den Schallgenerator (1; 9) und den Schallempfänger (2), zu steuern, und eine computergestützte Testergebnisschnittstelle enthält, um ein Testergebnis oder ein Bild eines getesteten Testobjekts (3) zu erfassen oder anzuzeigen, welches aus den Signalen des Schallempfängers (2) abgeleitet wurde,
**dadurch gekennzeichnet, dass**
der Schallgenerator (1) ein resonanzfreier thermoakustischer Ultraschallgenerator ist, welcher nicht auf mechanisch deformierbaren oder oszillierenden Bauteilen beruht, der Schallgenerator (1, 9) als ein gepulster Laser aufgebaut ist, welcher einen Dirac-ähnlichen Anregungslaserpuls mit einem Anregungspulssignal von weniger als 1 Mikrosekunde sendet, und dass der Schallempfänger (2) ein membranfreies laserbasiertes optisches Mikrofon ist, das membranfreie laserbasierte optische Mikrofon Druckvariationen durch optische Mittel auf der Grundlage einer interferometrischen Abfrage der optischen Wellenlängenveränderung, welche durch die durch Schalldruck induzierte Veränderung des Brechungsindexes des Schallübertragungsmediums bewirkt wird, in einer mit Luft oder Gas verbundenen Impulsechoanordnung oder in einer mit Luft oder Gas verbundenen Transmissionsmodenanordnung detektiert.

2. Testsystem nach Anspruch 1, **dadurch gekennzeichnet, dass** eine Schallabschirmwand (4) mit oder ohne physischen Kontakt zu dem Testobjekt (3) an dem Testsystem (1) bereitgestellt ist, um unerwünschte direkte Schallwellen (Sa) des Generators (1; 9) von Schallwellen (Sb) zu isolieren, welche durch das Testobjekt (3) beeinflusst oder davon reflektiert werden, und/oder wobei die Steuerung (12) eine Subkomponente zur spektralen Signalanalyse enthält.

3. Testsystem nach Anspruch 1 oder 2, wobei der Generator (1; 9) und/oder der Empfänger (2) im Betrieb in Bezug auf eine Vertikalebene auf die Oberfläche des Testobjekts (3) in einem Winkel (14) räumlich positioniert sind, um ein Testobjekt (3) zu konfrontieren, **dadurch gekennzeichnet, dass** eine mechanische Befestigung (7) in dem Testsystem (1) bereitgestellt ist, welche eingerichtet ist, um den Winkel (14) in Bezug auf die relative Position des Generators (1, 9) und/oder des Empfängers (2) zu der Vertikalebene auf das Testobjekt (3) zu variieren, wobei der Generator (1; 9) und der Empfänger (2) im Betrieb vorzugsweise durch die mechanische Befestigung (7) in Bezug auf ein Testobjekt (3) räumlich positioniert sind, welche Mittel zum Einstellen des Winkels (14) und/oder des Abstands zwischen dem Generator (1; 9) und dem Empfänger (2) bzw. dem Testobjekt (3) bereitstellt.

4. Testsystem nach einem der vorhergehenden Ansprüche, **dadurch gekennzeichnet, dass**
ein spezifisches Gas oder eine Flüssigkeit (10) bereitgestellt werden, um Luft oder ein anderes Schallübertragungsmedium zwischen dem Testobjekt (3), dem Generator (1; 9) und dem Empfänger (2) aufzuweisen, um eine Ausbreitung der luftgestützten Ultraschallwellen (5) zu ermöglichen, welche auf eine thermoakustische Weise emittiert werden.

5. Testsystem nach Anspruch 3, **dadurch gekennzeichnet, dass** der Empfänger (2) über die mechanische Befestigung (7) derartig vor dem Emitter (1b) befestigt ist, dass Emittierrichtung und Empfangsrichtung der Luftdruckwellen mindestens im Wesentlichen parallel sind.

6. Verfahren zum Testen eines Testobjekts (3) mit Ultraschalldruckwellen in Gas oder Flüssigkeit, welches einen Ultraschallgenerator (1; 9) und einen Ultraschallempfänger (2) einsetzt, **dadurch gekennzeichnet, dass**
ein Ultraschallgenerator (1; 9) ausgewählt wird, welcher eine resonanzfreie thermoakustische Ultraschalldruckwelle nahe oder auf der Oberfläche oder im Inneren des Testobjekts (3) erzeugt, während der Generator (1; 9) als ein gepulster Laser aufgebaut ist und einen Dirac-ähnlichen Anregungslaserpuls mit einem Anregungspulssignal von weniger als 1 Mikrosekunde sendet, und dass die reflektierten Ultraschallluftdruckwellen (5b) von dem Testobjekt (3) durch ein membranfreies laserbasiertes optisches Mikrofon als Schallempfänger (2) empfangen und detektiert werden, welcher aufgebaut ist, um Druckvariationen durch optische Mittel auf der Grundlage einer interferometrischen Abfrage der optischen Wellenlängenveränderung zu detektieren, welche durch die durch Schalldruck induzierte Veränderung des Brechungsindexes des Schallübertragungsmediums bewirkt wird, welche durch die reflektierenden Ultraschallluftdruckwellen (5b) bewirkt wird, wobei die detektierten Ultraschallluftdruckwellen (5b) analysiert werden und die Ergebnisse in einer herkömmlichen Weise erfasst oder angezeigt werden.

## Revendications

1. Système d'essai par ultrasons aériens pour un objet d'essai, comprenant un générateur de son (1; 9), un récepteur de son (2) et une commande pour contrôler à la fois le générateur de son (1; 9) et le récepteur de son (2), ainsi qu'une interface de résultats d'essai assistée par ordinateur pour enregistrer ou afficher un résultat d'essai ou une image d'un objet d'essai testé (3) à partir des signaux du récepteur de son (2), **caractérisé en ce que**
le générateur de son (1) est un générateur d'ultrasons thermo-acoustique sans résonance qui ne repose pas sur des pièces mécaniquement déformables ou oscillantes, ledit générateur de son (1, 9) est réalisé sous la forme d'un laser pulsé qui émet une impulsion laser d'excitation de type Dirac ayant un signal d'impulsion d'excitation inférieur à 1 microseconde, et le récepteur de son (2) est un microphone optique à laser sans membrane, ledit microphone optique à laser sans membrane détectant les variations de pression par des moyens optiques sur la base d'une lecture interférométrique de l'altération de longueur d'onde optique provoquée par l'altération induite par la pression acoustique de l'indice de réfraction du milieu de propagation du son, dans un agencement d'écho d'impulsion couplé par l'air ou par un gaz, ou dans un agencement de mode de transmission couplé par l'air ou par un gaz.

2. Système d'essai selon la revendication 1, **caractérisé en ce que** un mur d'insonorisation (4) avec ou sans contact physique avec l'objet d'essai (3) est pourvu sur le système d'essai (1) pour isoler les ondes sonores directes indésirables (Sa) du générateur (1 ; 9) des ondes sonores (Sb) influencées ou réfléchies par l'objet d'essai (3), et/ou dans lequel la commande (12) contient un sous-composant pour l'analyse du signal spectral.

3. Système d'essai selon la revendication 1 ou 2, dans lequel le générateur (1 ; 9) et/ou le récepteur (2) sont, quand ils sont utilisés, positionnés spatialement par rapport à un plan vertical sur la surface de l'objet d'essai (3) selon un angle (14) pour faire face à un objet d'essai (3), **caractérisé en ce qu'**un support mécanique (7) est pourvu dans le système d'essai (1), qui est adapté pour faire varier ledit angle (14) par rapport à la position du générateur (1, 9) et/ou du récepteur (2) relativement audit plan vertical sur l'objet d'essai (3), dans lequel de préférence le générateur (1; 9) et le récepteur (2) sont, quand ils sont utilisés, positionnés spatialement par rapport à un objet d'essai (3) par ledit support mécanique (7) qui fournit un moyen pour ajuster respectivement l'angle (14) et/ou la distance entre le générateur (1 ; 9), le récepteur (2) et l'objet d'essai (3).

4. Système d'essai selon l'une quelconque des revendications précédentes, **caractérisé en ce que**
un gaz ou un liquide spécifique (10) est pourvu pour procurer de l'air ou un autre milieu de propagation du son entre l'objet d'essai (3), le générateur (1 ; 9) et le récepteur (2) pour permettre la propagation des ondes ultrasonores aériennes (5) qui sont émises de manière thermo-acoustique.

5. Système d'essai selon la revendication 3, **caractérisé en ce que** le récepteur (2) est monté devant l'émetteur (1b) via le support mécanique (7), de sorte que la direction d'émission et la direction de réception des ondes de pression d'air sont au moins sensiblement parallèles.

6. Procédé de test d'un objet d'essai (3) avec des ondes de pression ultrasonores dans un gaz ou un liquide, employant un générateur d'ultrasons (1 ; 9) et un récepteur d'ultrasons (2), **caractérisé en ce que**
un générateur d'ultrasons (1 ; 9) est choisi pour créer une onde de pression ultrasonore thermo-acoustique sans résonance à proximité ou sur la surface de l'objet d'essai (3) ou à l'intérieur de celui-ci, tandis que ledit générateur (1 ; 9) est construit comme un laser pulsé et émet une impulsion laser d'excitation de type Dirac ayant un signal d'impulsion d'excitation de moins de 1 microseconde, et **en ce que** les ondes de pression d'air ultrasonores réfléchies (5b) provenant de l'objet d'essai (3) sont reçues et détectées par un microphone optique à laser sans membrane comme récepteur de son (2), qui est construit pour détecter les variations de pression par un moyen optique sur la base d'une lecture interférométrique de l'altération de longueur d'onde optique provoquée par l'altération induite par la pression acoustique de l'indice de réfraction du milieu de propagation du son causée par les ondes de pression d'air ultrasonores réfléchies (5b), dans lequel lesdites ondes de pression d'air ultrasonores détectées (5b) sont analysées et les résultats sont enregistrés ou affichés de manière conventionnelle.
